(19) Europäisches Patentamt
European Patent Office
Office européen des brevets

(11) **EP 2 180 232 B1**

(12) **EUROPEAN PATENT SPECIFICATION**

(45) Date of publication and mention
of the grant of the patent:
**30.11.2011 Bulletin 2011/48**

(51) Int Cl.:
*H01L 33/00* (2010.01)     *F21K 99/00* (2010.01)
*F21Y 101/02* (2006.01)

(21) Application number: **08166834.5**

(22) Date of filing: **16.10.2008**

(54) **A lighting device with LED and micro-lenses**

Beleuchtungsvorrichtung mit Leuchtdiode und Mikrolinsen

Dispositif d'éclairage avec LED et micro-lentilles

(84) Designated Contracting States:
**AT BE BG CH CY CZ DE DK EE ES FI FR GB GR
HR HU IE IS IT LI LT LU LV MC MT NL NO PL PT
RO SE SI SK TR**

(43) Date of publication of application:
**28.04.2010 Bulletin 2010/17**

(73) Proprietors:
• **Osram AG
81543 München (DE)**
• **OSRAM Opto Semiconductors GmbH
93055 Regensburg (DE)**
• **OSRAM S.P.A. - SOCIETA' RIUNITE OSRAM
EDISON CLERICI
20126 Milano (IT)**
Designated Contracting States:
**IT**

(72) Inventors:
• **Capeleto, Simone
35131, Padova (IT)**
• **Muschaweck, Julius
82131, Gauting (DE)**
• **Schwalenberg, Simon
93051, Regensburg (DE)**

(74) Representative: **Bosotti, Luciano
Buzzi, Notaro & Antonielli d'Oulx
Via Maria Vittoria, 18
10123 Torino (IT)**

(56) References cited:
**WO-A1-2006/131501     JP-A- 2005 216 782
US-A- 5 939 996          US-A1- 2006 050 530
US-A1- 2007 114 551      US-A1- 2008 074 896
US-A1- 2008 198 604**

**Description**

Field of the invention

This disclosure relates to lighting devices.

More specifically, this disclosure was devised with specific attention paid to its possible use in lighting devices comprising LED (Light Emitting Diode) modules.

Description of the related art

LED modules are increasingly used for lighting applications, such as for home environments. However, LED modules such as "white" LED modules may exhibit certain disadvantages, as related e.g. to achieving a homogenous circular, symmetric light distribution with controlled emission angle.

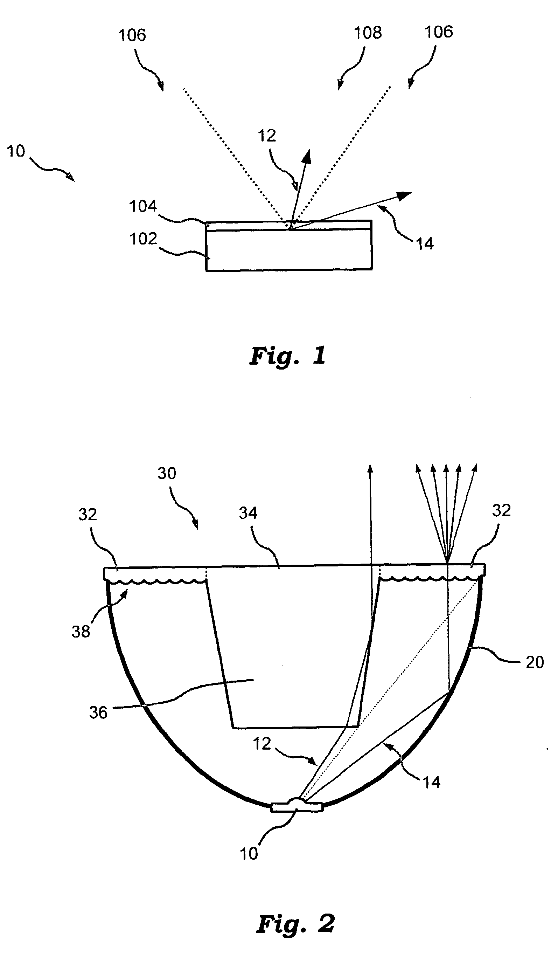

Figure 1 schematically illustrates a conventional white LED module 10 in which the emitted light is generated by means of a blue LED 102 and then partially "converted" into a "broadband" yellow light by a yellow phosphor film 104 overlying the surface of the LED module 10. As a result, white light is created by superposition of the blue and broadband yellow light, in such a way providing a white eye stimulus.

In these LED modules the emitted light may not be completely uniform. Specifically, a first light component 12 in an inner angular region 108 (e.g. +/-45°) may be shifted to blue due to a shorter conversion path in the phosphor film 104. Conversely, a light component 14 in an outer angular region 106 (of e.g. +/-45° to +/-90°) may be shifted to yellow due to a longer conversion path.

Prior art solutions try to overcome this problem by mixing the emitted light by means of faceted reflectors or Total Internal Reflection (TIR) lenses.

Both solutions involve complex production processes and are thus expensive. The reflector solution can only redirect and mix the part of the light in the outer angular region 108. The TIR lens can control nearly all light but the typical corresponding thermoplastics materials (PC or PMMA) have aging problems when mounted close to light/heat sources

More specifically, the invention relates to a device according to the preamble of claim 1, which is known, e.g. from US 2008/198 604 A1. Documents such as e.g. WO2006/131501 A1, US 2007/114551 A1 or JP 2005 216 782 A are also of interest for the invention.

Object and summary of the invention

The object of the invention is to provide a lighting device, which may provide good colour homogeneity and higher lifetime compared to prior art solutions, while production costs may be reduced.

According to the present invention, that object is achieved by means of a lighting device having the features set forth in claim 1 that follows.

The claims form an integral part of the disclosure of the invention as provided herein.

In an embodiment, the arrangement as described herein is a lighting device providing different light paths for the different light components.

In an embodiment, the arrangement comprises a LED module, a reflector and a cover.

In an embodiment, the light component in the inner angular region is collected in an inner zone of the cover, and the light component in the outer angular region is reflected by the reflector on an outer zone of the cover, wherein both light components are focused in the same direction thus combining the light components.

In an embodiment, the inner zone of the cover comprises for this purpose a lens for focusing the light component in the inner angular zone.

In an embodiment, at least part of the cover comprises on its surface micro-lenses for further mixing the light components.

In an embodiment, the inner zone of the cover comprises an integrator for guiding the light component in the inner angular region.

In an embodiment, the cover in mounted at a distance from the LED module and only a heat-resistant reflector is arranged in the vicinity of the LED module (which is a source of heat).

The arrangement described herein results thus in a device with improved reliability (e.g. in terms of resistance against blue light and high temperatures) and longer optics' lifetimes.

Brief description of the annexed representations

The invention will now be described, by way of example only, with reference to the annexed representations,

EP 2 180 232 B1

wherein:

- figure 1 has been described in the foregoing;
- figure 2 schematically shows a first embodiment of a lighting device;
- figure 3 is a diagram illustrating possible light intensity profiles;
- figures 4 schematically shows a second embodiment of a lighting device; and
- 5a and 5b further illustrate details of embodiments.

Detailed description of exemplary embodiment

In the following description, numerous specific details are given to provide a thorough understanding of embodiments. The embodiments can be practiced without one or more of the specific details, or with other methods, components, materials, etc. In other instances, well-known structures, materials, or operations are not shown or described in detail to avoid obscuring aspects of the embodiments.

Reference throughout this specification to "one embodiment" or "an embodiment" means that a particular feature, structure, or characteristic described in connection with the embodiment is included in at least one embodiment. Thus, the appearances of the phrases "in one embodiment" or "in an embodiment" in various places throughout this specification are not necessarily all referring to the same embodiment. Furthermore, the particular features, structures, or characteristics may be combined in any suitable manner in one or more embodiments.

The headings provided herein are for convenience only and do not interpret the scope or meaning of the embodiments.

Figure 2 shows a lighting device comprising a "white" LED module 10, a reflector 20 and a cover 30.

In the embodiment considered, the LED module 10 is essentially as already described in connection with figure 1. The module 10 thus produces a first light component 12 in an inner angular region 108 and a light component 14 in an outer angular region 106.

The light component 12 in the inner angular region 108 is collected in a inner zone 34 of the cover 30.

In the embodiment illustrated, the inner zone 34 of the cover 30 comprises an integrator 36, which collects and guides the light component 12 in the inner angular region 108, acting thus as a separator between the two light components. It is thus possible to adapt the device to different angles between the inner and outer angular regions 106 and 108 by modifying the diameter or generally the dimensions, of the integrator 36.

In an embodiment, the cover 30 and the integrator 36 are be made of a single piece of glass or plastics, thus reducing production and assembling costs.

In an embodiment, the integrator 36 has a substantially cylindrical or frustum-like form, wherein the integrator may be solid or hollow.

Specifically, in an embodiment a hollow integrator is used, where the inner side walls are metallized or have applied thereto a reflective coating of e.g. alumina or silver. Those of skill in the art will appreciate that any material or geometrical form may be used for the integrator 36 in order to guarantee that the light component in the inner angular region 108 is collected and guided.

Conversely, the second light component 14 in the outer angular region 106 is reflected by the reflector 20 towards an outer zone 32 of the cover 30.

In an embodiment, a reflector 20 is used, which focuses the second light component 14 in the direction of the first light component 12. In this way, the two light components 12 and 14 are propagated (focused) in the same direction thus combining the two light components.

In an embodiment, the first zone 34 comprises for this purpose also on the internal and/or external side a lens to focus the first light component 12.

In an embodiment, the outer zone 32 of the cover 30 comprises micro-lenses 38 with the purpose of mixing and/or further focusing the reflected light component 14, thus achieving a good light uniformity.

In an embodiment, the micro-lenses 38 are arranged on the internal and/or external side of the cover 30.

In an embodiment, the inner zone 34 of the cover comprises on the internal and/or external side micro-lenses to mix and/or to focus the first light component 12.

The use of a single lens and of micro-lenses in the inner zone of the cover can also be combined. For example, a single lens may be used on the bottom side of the integrator and micro-lenses may be used on the external side of the inner zone 34 of the cover 30.

For example, the cover 30 may have on its external side a planer surface when the micro-lenses or lenses are arranged exclusively on the internal side of the cover.

Moreover, it is possible to provide various intensity profiles of the light components in relation to the emission angle by modifying the optical characterizes of the reflector 20 and the cover 30.

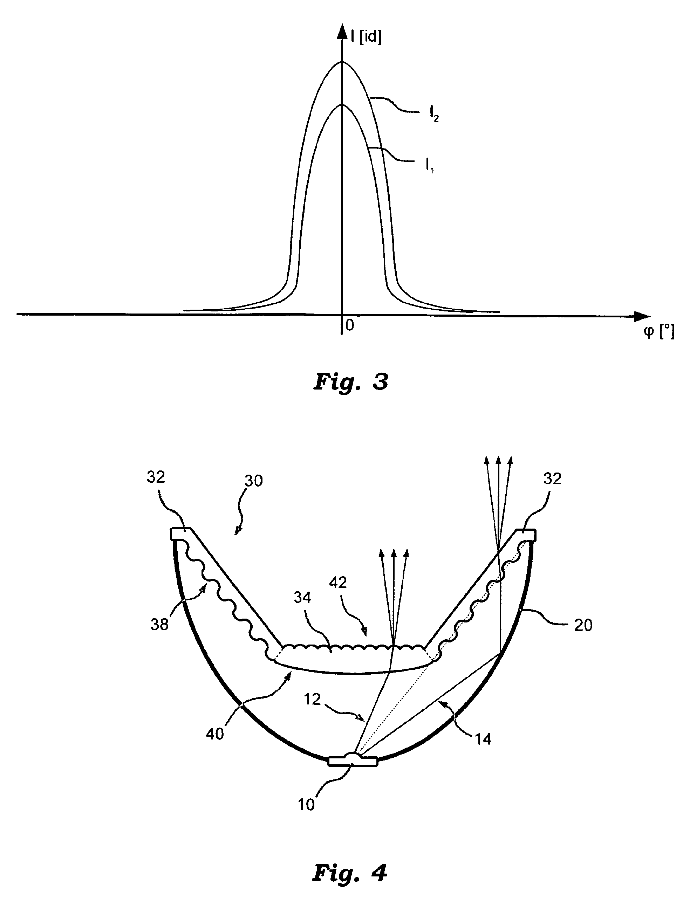

Figure 3 shows in that respect a possible diagram for the intensity I of the light components (ordinate scale) as function of the angle φ (abscissa scale). The intensities are denoted $I_1$ and $I_2$ for the first and second component 12 and 14, respectively.

Good color homogeneity over the complete emission range may be achieved when the intensities of the light components are proportional according to a constant coefficient r:

$$r = I_1(\varphi)/I_2(\varphi); \quad -90° < \varphi < 90°.$$

Experiments show that a variation of less than 20%, preferably 5-10% already provides acceptable colour homogeneity.

The overall colour homogeneity may also be improved by focusing the light components in a narrow emission angle by means of the integrator 36 and the reflector 20, and the micro-lenses 38 mix the light components only within a very small angle (e.g. some degrees).

In this way it is also possible to mask possible structures of the LED module.

Figure 4 show a second embodiment. In this embodiment the cover 30 has a substantially concave, cup-like overall shape.

The use of a concave cover provides the advantage that no additional integrator may be required to collect and guide the first light component 12. In this way, it is possible to reduce the thickness of the cover and thus light emission is improved.

Again, the cover 30 may comprise on the internal and/or external side lenses or micro-lenses in order to mix and/or to focus the light components.

In the exemplary embodiment shown with in figure 4, the outer zone 32 of the cover 30 comprises micro-lenses 38 on the internal side. Conversely, the inner zone 34 comprises both a single lens 40 on the internal side and micro-lenses 42 on the external side.

Generally, any suitable form may be used for the micro-lenses 38/42 in order to guarantees that the light components are sufficiently mixed in order to reach the required colour homogeneity.

In the embodiment of figure 4 the micro-lenses 42 in the inner zone 34 of the cover 30 have a substantial semi-spherical form. Conversely, the micro-lenses 38 in the outer zone have a (bi-dimensional) wave-like form. Such waves may extend in circular and/or tangential direction. For example, sinusoid-like forms may be used for this purpose.

Different structures for the micro-lenses on the internal and external side.

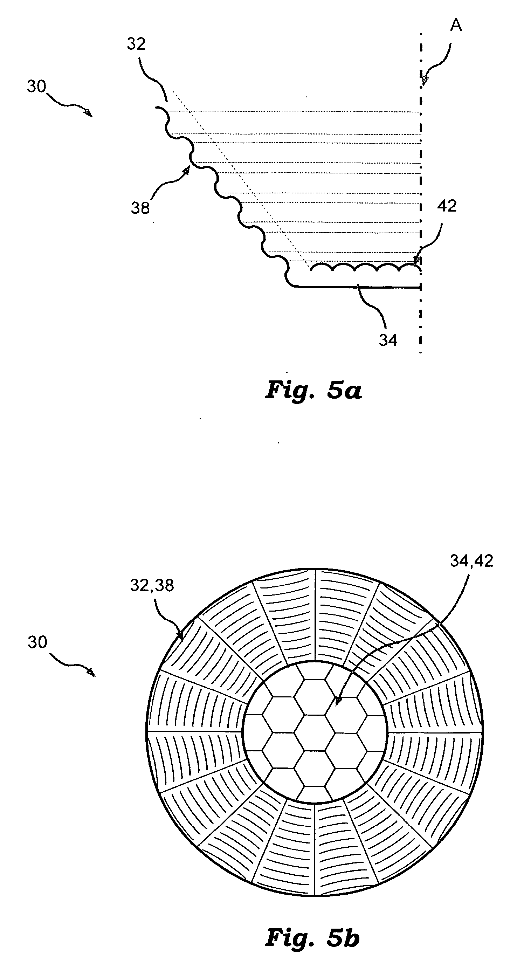

Figures 5a and 5b show in that respect possible embodiments of the micro-lenses, wherein a concentric wave-like form is used on the internal side and a circular-symmetric wave-like form is used on the external side.

Specifically, figure 5a shows that the micro-lenses 38 on the internal side have in tangential direction a sinus-like wave form, which extends circular-symmetrically according to an axis A, and figure 5b shows that the micro-lenses 38 on the external side have a sinus-like wave form in circular direction.

Those of skill in the art will appreciate that the arrangements described herein may also be extended to multi LED systems by adapting the reflector and cover accordingly.

Without prejudice to the underlying principles of the invention, the details and embodiments may vary, even significantly, with respect to what has been described herein merely by way of example, without departing from the scope of the invention as defined by the annexed claim.

## Claims

1. A lighting device including at least one LED module (10) emitting a first light component (12) in an inner angular range (108) and a second light component (14) in an outer angular range as well as a cover (30) and a reflector (20) coupled with said at least one LED module (10), and wherein:

   - said cover (30) includes an inner zone (34) and an outer zone (32), whereby said first light component (12) is collected in said inner zone (34) of said cover (30),
   - said reflector (20) is configured to reflect said second light component (14) towards said outer zone (32) of said cover (30), whereby said second light component (14) is reflected in the direction of said first light component (12),
   - at least part of said cover (30) is provided with micro-lenses (38, 42) for mixing said first light component (12) and said second reflected (14) light component, and
   - said cover (30) is provided with micro-lenses (38) at said outer zone (32) for mixing said second reflected light component (14), wherein, at said outer zone (32), said cover (30) has on its external side a planar surface, wherein said micro-lenses (38), at said outer zone (32), are arranged exclusively on the internal side of said cover (30),

**characterized in that** at said inner zone (34) a single lens is provided on the internal side and micro-lenses (42) are provided at the external side of said cover (30).

2. The device of Claim 1, wherein said cover (30) is provided with micro-lenses (42) at said inner zone of said cover for mixing said first light component (12).

3. The device of any of the previous claims, wherein said micro-lenses (38, 42) are comprised, at least partly, of semi-spherical micro-lenses.

4. The device of any of the previous claims, wherein said micro-lenses (38, 42) are comprised, at least partly, of micro-lenses (38, 42) having a wave-like form in a tangential direction which extends circular symmetrically according to an axis (A).

5. The device of any of the previous claims, wherein said micro-lenses (38, 42) are comprised, at least partly, of micro-lenses (38, 42) having a wave-like form in circular direction.

6. The device of any of the previous claims, wherein said inner zone (34) of said cover (30) comprises an integrator (36) for collecting and guiding said first light component (12).

7. The device of Claim 6, wherein said integrator is hollow with side walls being metallised or having applied thereto reflective coating.

8. The device of any of the previous claims, wherein said cover (30) has a concave form.

9. The device of any of the previous claims, wherein said LED module (10) is a white LED module.

10. The device of any of the previous claims, wherein said device is configured for providing an intensity ($I_2$) of said reflected second light-component (12) which is over the complete emission range substantially proportional to the intensity ($I_1$) of said first light-component (14).

11. The device of any of the previous claims, wherein said cover (30) is made of a single plastic or glass piece.


**Patentansprüche**

1. Beleuchtungsvorrichtung, umfassend zumindest ein LED Modul (10), das eine erste Lichtkomponente (12) in einem inneren Winkelbereich (108) und eine zweite Lichtkomponente (14) in einem äußeren Winkelbereich emittiert, sowie eine Abdeckung (30) und einen Reflektor (20), der mit dem zumindest einen LED Modul (10) gekoppelt ist, und wobei:

- die Abdeckung (30) eine innere Zone (34) und eine äußere Zone (32) umfasst, wobei die erste Lichtkomponente (12) in der inneren Zone (34) der Abdeckung (30) gesammelt wird,
- der Reflektor (20) ist dazu konfiguriert die zweite Lichtkomponente (14) in Richtung der äußeren Zone (32) der Abdeckung (30) zu reflektieren, wobei die zweite Lichtkomponente (14) in der Richtung der ersten Lichtkomponente (12) reflektiert wird,
- zumindest ein Teil der Abdeckung (30) ist mit Mikrolinsen (38, 42) versehen zum Mischen der ersten Lichtkomponente (12) und der zweiten reflektierten (14) Lichtkomponente, und
- die Abdeckung (30) ist mit Mikrolinsen (38) an der äußeren Zone (32) versehen zum Mischen der zweiten reflektierten Lichtkomponente (14), wobei, an der äußeren Zone (32) die Abdeckung (30) an ihrer äußeren Seite eine ebene Oberfläche aufweist, wobei die Mikrolinsen (38) an dieser äußeren Zone (32) ausschließlich an der inneren Seite der Abdeckung (30) angeordnet sind,

**dadurch gekennzeichnet, dass** an der inneren Zone (34) eine einzelne Linse auf der inneren Seite bereitgestellt wird und Mikrolinsen (42) an der äußeren Seite der Abdeckung (30) bereitgestellt werden.

**2.** Vorrichtung nach Anspruch 1, wobei die Abdeckung (30) mit Mikrolinsen (42) an der inneren Zone der Abdeckung versehen ist zum Mischen der ersten Lichtkomponente (12).

**3.** Vorrichtung nach irgendeinem der vorhergehenden Ansprüche, wobei die Mikrolinsen (38, 42) zumindest teilweise halbsphärische Mikrolinsen bilden.

**4.** Vorrichtung nach irgendeinem der vorhergehenden Ansprüche, wobei die Mikrolinsen (38, 42) zumindest teilweise Mikrolinsen (38, 42) bilden, die eine wellenähnliche Form in einer tangentialen Richtung aufweisen, welche sich kreisförmig symmetrisch gemäß einer Achse (A) erstreckt.

**5.** Vorrichtung nach irgendeinem der vorhergehenden Ansprüche, wobei die Mikrolinsen (38, 42) zumindest teilweise Mikrolinsen (38, 42) bilden, die eine wellenähnliche Form in einer kreisförmigen Richtung aufweisen.

**6.** Vorrichtung nach irgendeinem der vorhergehenden Ansprüche, wobei die innere Zone (34) der Abdeckung (30) einen Integrator (36) umfasst zum Sammeln und Leiten der ersten Lichtkomponente (12).

**7.** Vorrichtung nach Anspruch 6, wobei der Integrator hohl ist mit Seitenwänden, die metallisiert sind oder eine reflektierende Beschichtung darauf angebracht haben.

**8.** Vorrichtung nach irgendeinem der vorhergehenden Ansprüche, wobei die Abdeckung (30) eine konkave Form aufweist.

**9.** Vorrichtung nach irgendeinem der vorhergehenden Ansprüche, wobei das LED Modul (10) ein weißes LED Modul ist.

**10.** Vorrichtung nach irgendeinem der vorhergehenden Ansprüche, wobei die Vorrichtung dazu konfiguriert ist, eine Intensität (12) der reflektierten zweiten Lichtkomponente (12) bereitzustellen, die über den gesamte Emissionsbereich im wesentlichen proportional zu der Intensität ($I_1$) der ersten Lichtkomponente (14) ist.

**11.** Vorrichtung nach irgendeinem der vorhergehenden Ansprüche, wobei die Abdeckung (30) aus einem einzigen Kunststoff oder Glassteil hergestellt ist.

**Revendications**

**1.** Un dispositif d'éclairage comprenant au moins un module LED (10) émettant une première composante lumineuse (12) dans une plage angulaire intérieure (108) et une seconde composante lumineuse (14) dans une plage angulaire extérieure ainsi qu'un capot (30) et un réflecteur (20) couplé avec ledit au moins un module LED (10), et dans lequel :

- ledit capot (30) comprend une zone interne (34) et une zone externe (32), de sorte que ladite première composante lumineuse (12) soit recueillie dans ladite zone interne (34) dudit capot (30),
- ledit réflecteur (20) est configuré pour réfléchir ladite seconde composante lumineuse (14) en direction de ladite zone externe (32) dudit capot (30), de sorte que ladite seconde composante lumineuse (14) soit réfléchie dans la direction de ladite première composante lumineuse (12),
- au moins une partie dudit capot (30) est pourvue de microlentilles (38, 42) pour mélanger ladite première composante lumineuse (12) et ladite seconde composante lumineuse réfléchie (14), et
- ledit capot (30) est pourvu de microlentilles (38) sur ladite zone externe (32) pour mélanger ladite seconde composante lumineuse (14) réfléchie, où, sur ladite zone externe (32), ledit capot (30) possède sur sa face extérieure une surface plane, lesdites microlentilles (38), sur ladite zone externe (32), étant disposées exclusivement sur la face intérieure dudit capot (30),

**caractérisé en ce que** sur ladite zone interne (34) il est prévu une unique lentille sur la face intérieure et des microlentilles (42) sont prévues sur la face extérieure dudit capot (30).

**2.** Le dispositif de la revendication 1, dans lequel ledit capot (30) est pourvu de microlentilles (42) sur ladite zone interne dudit capot pour mélanger ladite première composante lumineuse (12).

**3.** Le dispositif de l'une des revendications précédentes, dans lequel lesdites microlentilles (38, 42) sont constituées, au moins partiellement, de microlentilles semi-sphériques.

**4.** Le dispositif de l'une des revendications précédentes, dans lequel lesdites microlentilles (38, 42) sont constituées, au moins partiellement, de microlentilles (38, 42) possédant une forme semblable à une vague dans une direction tangentielle qui s'étend symétriquement circulaire par rapport à un axe (A).

**5.** Le dispositif de l'une des revendications précédentes, dans lequel lesdites microlentilles (38, 42) sont constituées, au moins partiellement, de microlentilles (38, 42) possédant une forme semblable à une vague en direction circulaire.

**6.** Le dispositif de l'une des revendications précédentes, dans lequel ladite zone interne (34) dudit capot (30) comprend un intégrateur (36) pour recueillir et guider ladite première composante lumineuse (12).

**7.** Le dispositif de la revendication 6, dans lequel ledit intégrateur est creux avec des parois latérales qui sont métallisées ou sur lesquelles est appliqué un revêtement réflecteur.

**8.** Le dispositif de l'une des revendications précédentes, dans lequel ledit capot (30) présente une forme concave.

**9.** Le dispositif de l'une des revendications précédentes, dans lequel ledit module LED (10) est un module LED blanche.

**10.** Le dispositif de l'une des revendications précédentes, dans lequel ledit dispositif est configuré pour produire une intensité ($I_2$) de ladite seconde composante lumineuse réfléchie (12) qui soit au-dessus de la plage d'émission complète substantiellement proportionnelle à l'intensité ($I_1$) de ladite première composante lumineuse (14).

**11.** Le dispositif de l'une des revendications précédentes, dans lequel ledit capot (30) est réalisé en une pièce unique de plastique ou de verre.

*Fig. 1*

*Fig. 2*

**Fig. 3**

**Fig. 4**

**Fig. 5a**

**Fig. 5b**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2008198604 A1
- WO 2006131501 A1
- US 2007114551 A1
- JP 2005216782 A